# EUROPEAN PATENT SPECIFICATION

(11) **EP 3 901 908 B1**
(45) Date of publication and mention of the grant of the patent: **17.05.2023**
(21) Application number: 21155914.1
(22) Date of filing: 09.02.2021
(51) Int. Cl.: G06T 7/246, G06T 7/73

(54) **METHOD AND APPARATUS FOR TRACKING TARGET, DEVICE, MEDIUM AND COMPUTER PROGRAM PRODUCT**
VERFAHREN UND VORRICHTUNG ZUR ZIELVERFOLGUNG, VORRICHTUNG, MEDIUM UND COMPUTERPROGRAMMPRODUKT
PROCÉDÉ ET APPAREIL DE SUIVI DE CIBLE, DISPOSITIF, SUPPORT ET PRODUIT PROGRAMME INFORMATIQUE

(30) Priority: 22.04.2020 CN 202010320567
(43) Date of publication of application: 27.10.2021
(73) Proprietor: BEIJING BAIDU NETCOM SCIENCE AND TECHNOLOGY CO. LTD., 100085 Beijing (CN)
(72) Inventor: SU, Xiangbo, Beijing, 100085 (CN); YUAN, Yuchen, Beijing, 100085 (CN); SUN, Hao, Beijing, 100085 (CN)
(74) Representative: V.O.

(56) References cited:
- Ren Shaoqing ET AL: "Faster R-CNN: Towards Real-Time Object Detection with Region Proposal Networks", , 6 January 2016 (2016-01-06), pages 1-14, XP055821951, Retrieved from the Internet: URL:https://arxiv.org/abs/1506.01497 [retrieved on 2021-07-07]
- LI BO ET AL: "High Performance Visual Tracking with Siamese Region Proposal Network", 2018 IEEE/CVF CONFERENCE ON COMPUTER VISION AND PATTERN RECOGNITION, IEEE, 18 June 2018 (2018-06-18), pages 8971-8980, XP033473822, DOI: 10.1109/CVPR.2018.00935 [retrieved on 2018-12-14]
- Sambasivarao. K: "Region Proposal Network - A detailed view | by Sambasivarao. K | Towards Data Science", , 21 December 2019 (2019-12-21), pages 1-5, XP055821743, Retrieved from the Internet: URL:https://towardsdatascience.com/region- proposal-network-a-detailed-view-1305c7875 853 [retrieved on 2021-07-06]
- ROSS GIRSHICK: "Fast R-CNN", ARXIV, 7 December 2015 (2015-12-07), pages 1440-1448, XP055646790, DOI: 10.1109/ICCV.2015.169 ISBN: 978-1-4673-8391-2
- ROSS GIRSHICK ET AL: "Rich Feature Hierarchies for Accurate Object Detection and Semantic Segmentation", 2014 IEEE CONFERENCE ON COMPUTER VISION AND PATTERN RECOGNITION, 1 June 2014 (2014-06-01), pages 580-587, XP055612110, DOI: 10.1109/CVPR.2014.81 ISBN: 978-1-4799-5118-5
- FAN HENG ET AL: "Siamese Cascaded Region Proposal Networks for Real-Time Visual Tracking", 2019 IEEE/CVF CONFERENCE ON COMPUTER VISION AND PATTERN RECOGNITION (CVPR), IEEE, 15 June 2019 (2019-06-15), pages 7944-7953, XP033687142, DOI: 10.1109/CVPR.2019.00814 [retrieved on 2020-01-08]

## Description

### TECHNICAL FIELD

Embodiments of the present disclosure relate to the field of computer technology, specifically to the field of computer vision technology, and more specifically to a method and apparatus for tracking a target, a device, a medium and a computer program product.

### BACKGROUND

As an important basic technology of computer vision, visual target tracking technology is widely used in the fields, such as security, and transport. The visual target tracking technology refers to searching for a specified target. Conventional target tracking systems, such as radar, infrared, sonar, and laser, all rely on specific hardware, and have certain limitations. A visual target tracking system only needs to acquire an image through an ordinary optical camera without the need of additionally providing other dedicated devices.

In the related art, when a tracked target has a situation, such as fast motion, partial occlusion, or motion blurring, it is difficult to comprehensively perceive the target, thereby generating wrong tracking results.

Ren Shaoqing ET AL: "Faster R-CNN: Towards Real-Time Object Detection with Region Proposal Networks",6 January 2016 (2016-01-06), pages 1-14, discloses region proposal networks that simultaneously predicts object bounds and objectness scores at each position.

Fan Heng ET AL: "Siamese Cascaded Region Proposal Networks for Real-Time Visual Tracking" discloses an object tracking method based on region proposal networks.

### SUMMARY

The invention is set out in the appended set of claims.

According to the solutions of embodiments of the present disclosure, at least two candidate positions of a to-be-tracked target can be selected, and the candidate positions can be combined, thereby effectively avoiding the problem that the target is difficult to track because the target is blurred due to the target being occluded or moving fast, and improving the robustness and precision of the tracking system.

### BRIEF DESCRIPTION OF THE DRAWINGS

After reading detailed description of non-limiting embodiments with reference to the following accompanying drawings, other features, objectives, and advantages of embodiments of the present disclosure will become more apparent.
Fig. 1 is a diagram of an example system architecture in which some embodiments of the present disclosure may be implemented;
Fig. 2 is a flowchart of a method for tracking a target according to an embodiment of the present disclosure;
Fig. 3 is a schematic diagram of an application scenario of the method for tracking a target according to an embodiment of the present disclosure;
Fig. 4 is a flowchart of the method for tracking a target according to another embodiment of the present disclosure;
Fig. 5 is a schematic structural diagram of an apparatus for tracking a target according to an embodiment of the present disclosure; and
Fig. 6 is a block diagram of an electronic device for implementing the method for tracking a target of embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only. Accordingly, it should be recognized by one of the ordinary skilled in the art that various changes and modifications may be made to embodiments described herein without departing from the scope and spirit of the present disclosure. Also, for clarity and conciseness, descriptions for well-known functions and structures are omitted in the following description.

It should also be noted that some embodiments in the present disclosure and some features in the disclosure may be combined with each other on a non-conflict basis. Features of the present disclosure will be described below in detail with reference to the accompanying drawings and in combination with embodiments.

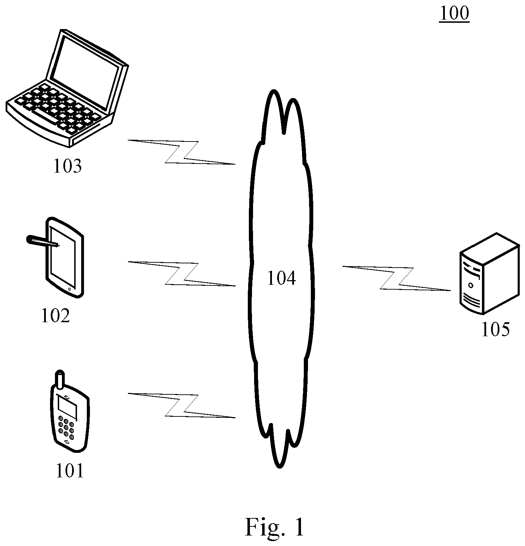

Fig. 1 shows an example system architecture 100 in which a method for tracking a target or an apparatus for tracking a target of embodiments of the present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical fiber cables.

A user may interact with the server 105 using the terminal devices 101, 102, and 103 via the network 104, e.g., to receive or send a message. The terminal devices 101, 102, and 103 may be provided with various communication client applications, such as a video application, a live broadcast application, an instant messaging tool, an email client, and social platform software.

The terminal devices 101, 102, and 103 here may be hardware, or may be software. When the terminal devices 101, 102, and 103 are hardware, the terminal devices may be various electronic devices with a display screen, including but not limited to a smart phone, a tablet computer, an e-book reader, a laptop portable computer, a desktop computer, or the like. When the terminal devices 101, 102, and 103 are software, the terminal devices may be installed in the above-listed electronic devices, may be implemented as a plurality of software programs or software modules (e.g., a plurality of software programs or software modules configured to provide distributed services), or may be implemented as a single software program or software module. This is not specifically limited here.

The server 105 may be a server providing various services, such as a backend server providing support for the terminal devices 101, 102, and 103. The backend server can process, e.g., analyze, data, such as a feature map of a received to-be-processed image, and return the processing result (e.g., a position of a to-be-tracked target) to the terminal devices.

It should be noted that the method for tracking a target provided in embodiments of the present disclosure may be executed by the server 105 or the terminal devices 101, 102, and 103. Accordingly, the apparatus for tracking a target may be provided in the server 105 or the terminal devices 101, 102, and 103.

It should be understood that the numbers of terminal devices, networks, and servers in Fig. 1 are merely illustrative. Any number of terminal devices, networks, and servers may be provided based on actual requirements.

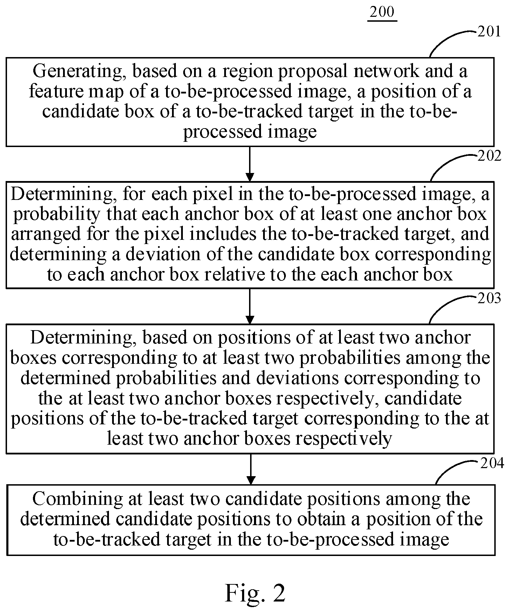

Further referring to Fig. 2, a process 200 of a method for tracking a target according to an embodiment of the present disclosure is shown. The method for tracking a target includes the following steps.

Step 201: generating, based on a region proposal network and a feature map of a to-be-processed image, a position of a candidate box of a to-be-tracked target in the to-be-processed image.

In the present embodiment, an executing body (e.g., the server or the terminal device shown in Fig. 1) on which the method for tracking a target is performed may obtain the position of the candidate box of the to-be-tracked target in the to-be-processed image based on the region proposal network (RPN) and the feature map of the to-be-processed image. The executing body may generate the position of the candidate box of the to-be-tracked target by various approaches based on the region proposal network and the feature map of the to-be-processed image. For example, the executing body may directly input the feature map of the to-be-processed image into the region proposal network to obtain the position of the candidate box of the to-be-tracked target in the to-be-processed image outputted from the region proposal network. The position in embodiments of the present disclosure may be expressed as a bounding box indicating the position, where the bounding box may be expressed as coordinates of a specified point, side length and/or height. For example, a position may be expressed as (x, y, w, h), where (x, y) are coordinates of a specified point (e.g., a center point or an upper left vertex), and (w, h) are width and height of a bounding box.

In practice, the executing body may directly acquire the feature map of the to-be-processed image locally or from other electronic devices. In addition, the executing body may further acquire the to-be-processed image, and generate the feature map of the to-be-processed image using a deep neural network (e.g., a feature pyramid network, a convolutional neural network, or a residual neural network) capable of generating, from an image, a feature map of the image.

Step 202: determining, for a pixel in the to-be-processed image, a probability that each anchor box of at least one anchor box arranged for the pixel includes the to-be-tracked target, and determining a deviation of the candidate box corresponding to each anchor box relative to the each anchor box.

In the present embodiment, the executing body may determine, for the pixel in the to-be-processed image, the probability that each anchor box of the at least one anchor box arranged for the pixel includes the to-be-tracked target. In addition, the executing body may further determine, for the pixel in the to-be-processed image, the deviation of the candidate box corresponding to each anchor box of the at least one anchor box arranged for the pixel relative to the each anchor box. The deviation here may include a position offset amount, e.g., a position offset amount of a specified point (e.g., the center point or the upper left vertex). The pixel may be each pixel in the to-be-processed image, or may be a specified pixel (e.g., a pixel at specified coordinates) in the to-be-processed image. The executing body determining the probability for the each pixel can further improve the tracking precision compared with the determining the probability only for the specified pixel.

Specifically, the executing body or other electronic devices may set at least one anchor box, i.e., at least one anchor, for the pixel in the to-be-processed image. The candidate box generated by the executing body may include the candidate box corresponding to each anchor box of the at least one anchor box arranged for the pixel in the to-be-processed image.

In practice, the executing body may determine the probability and the deviation by various approaches. For example, the executing body may acquire a deep neural network for classification, and input the feature map of the to-be-processed image into a classification processing layer of the deep neural network to obtain the probability that the each anchor box includes the to-be-tracked target. In addition, the executing body may further acquire another deep neural network for bounding box regression, and input the feature map of the to-be-processed image into a bounding box regression processing layer of the deep neural network to obtain the deviation of the candidate box corresponding to the each anchor box relative to the anchor box. Both of the two deep neural networks here may include the region proposal network.

Step 203: determining, based on positions of at least two anchor boxes corresponding to at least two probabilities among the determined probabilities and deviations corresponding to the at least two anchor boxes respectively, candidate positions of the to-be-tracked target corresponding to the at least two anchor boxes respectively.

In the present embodiment, the executing body may determine, based on the positions of the at least two anchor boxes corresponding to the at least two probabilities among the determined probabilities and the deviations corresponding to the at least two anchor boxes respectively, the candidate positions of the to-be-tracked target for each anchor box of the at least two anchor boxes. Specifically, each probability of the at least two probabilities among the determined probabilities corresponds to a position of an anchor box.

The at least two anchor boxes here may include anchor boxes arranged for the same pixel in the to-be-processed image, and may further include anchor boxes arranged for different pixels.

In practice, the executing body may determine the at least two probabilities by various approaches. For example, the executing body may use at least two larger probabilities in descending order as the at least two probabilities.

Alternatively, the executing body may perform position offsetting on each anchor box of the at least two anchor boxes based on the deviation (e.g., a position offset amount), thereby changing the position of the anchor box. The executing body may use the changed position of the anchor box as the candidate position of the to-be-tracked target.

Step 204: combining at least two candidate positions among the determined candidate positions to obtain a position of the to-be-tracked target in the to-be-processed image.

In the present embodiment, the executing body acquires at least two candidate positions among the determined candidate positions, and combines the at least two candidate positions, i.e., using a set of all positions among the at least two candidate positions as the position of the to-be-tracked target in the to-be-processed image. Specifically, the executing body or other electronic devices may determine at least two candidate positions as per a preset rule (e.g., inputting into a preset model for determining the at least two candidate positions) or randomly from the determined candidate positions.

The method provided in embodiments of the present disclosure can select at least two candidate positions of the to-be-tracked target, and combine the candidate positions, thereby effectively avoiding the problem that the target is difficult to track because the target is blurred due to the target being occluded or moving fast, and improving the robustness and precision of the tracking system.

Step 201 includes : inputting a feature map of a template image of the to-be-tracked target and the feature map of the to-be-processed image into the region proposal network, to obtain the position of the candidate box of the to-be-tracked target in the to-be-processed image outputted from the region proposal network, where the template image of the to-be-tracked target corresponds to a local region within a bounding box of the to-be-tracked target in an original image of the to-be-tracked target.

In these implementations, the executing body may directly use the feature map of the template image of the to-be-tracked target and the feature map of the to-be-processed image as an input of the region proposal network, and input the feature map of the template image of the to-be-tracked target and the feature map of the to-be-processed image into the region proposal network to obtain the position of the candidate box of the to-be-tracked target in the to-be-processed image outputted from the region proposal network. The region proposal network may be used for representing a corresponding relationship between both of the feature map of the template image of the to-be-tracked target and the feature map of the to-be-processed image and the position of the candidate box of the to-be-tracked target in the to-be-processed image.

In practice, the executing body may directly acquire the feature map of the template image of the to-be-tracked target and the feature map of the to-be-processed image locally or from other electronic devices. In addition, the executing body may further acquire the template image of the to-be-tracked target and the to-be-processed image, and generate the feature map of the template image of the to-be-tracked target and the feature map of the to-be-processed image using the deep neural network (e.g., a feature pyramid network, a convolutional neural network, or a residual neural network).

The template image of the to-be-tracked target refers to an image accurately indicating the to-be-tracked target, and generally does not include any content other than the to-be-tracked target. For example, the template image of the to-be-tracked target may correspond to the local region within the bounding box of the to-be-tracked target in the original image of the to-be-tracked target. The executing body or other electronic devices may detect the bounding box of the to-be-tracked target from the original image of the to-be-tracked target including the to-be-tracked target, such that the executing body may separate the local region where the bounding box is located. The executing body may directly use the local region as the template image of the to-be-tracked target, or may perform size scaling on the local region to scale the local region to a target size, and use the image of the target size as the template image of the to-be-tracked target.

These implementations can more accurately acquire the position of the candidate box using a template of the to-be-tracked target.

In some alternative implementations of the present embodiment, the at least one candidate position may be obtained by: voting for each of the determined candidate positions using a vote processing layer of a deep neural network, to generate a voting value of the each of the determined candidate positions; and determining a candidate position with a voting value greater than a specified threshold as the at least one candidate position, where the larger the number of anchor boxes included in the at least two anchor boxes is, the larger the specified threshold is.

In these alternative implementations, the executing body may vote for each of the determined candidate positions using the vote processing layer of the deep neural network, to generate the voting value of the each of the determined candidate positions. Then, the executing body may determine all candidate positions with voting values greater than the specified threshold as the at least one candidate position.

Specifically, the deep neural network here may be a variety of networks capable of voting, e.g., a Siamese network. The vote processing layer may be a processing layer for voting to obtain a voting value in a network.

The specified threshold in these implementations may be associated with the number of anchor boxes included in the at least two anchor boxes, i.e., the number of probabilities included in the at least two probabilities, thereby limiting the number of candidate positions involved in the combining and the number of anchor boxes in the selected at least two anchor boxes to an appropriate range. Further, in these implementations, a candidate position indicating the to-be-tracked target can be more accurately determined through voting.

In some alternative implementations of the present embodiment, the at least two probabilities may be obtained by: processing the determined probabilities using a preset window function, to obtain a processed probability of each of the determined probabilities; and selecting at least two processed probabilities from the processed probabilities in descending order, where probabilities corresponding to the selected at least two processed probabilities among the determined probabilities are the at least two probabilities.

In these alternative implementations, the executing body may process the determined probabilities using the preset window function, to obtain the processed probability of each of the determined probabilities. Then, the executing body may select at least two processed probabilities from the processed probabilities in descending order of values of the processed probabilities. The unprocessed determined probabilities corresponding to the processed probabilities selected here are the at least two probabilities.

In practice, the preset window function here may be a cosine window function, or may be other window functions, such as a raised cosine window function.

In these alternative implementations, the determined probabilities may be corrected using the window function, to eliminate errors between the determined probabilities and the real probabilities, and improve the accuracy of the probabilities.

In some alternative implementations of the present embodiment, step 202 may include: inputting the generated position of the candidate box into a classification processing layer in the deep neural network, to obtain the probability that each anchor box of the at least one anchor box arranged for each pixel in the to-be-processed image includes the to-be-tracked target and that is outputted from the classification processing layer; and inputting the generated position of the candidate box into a bounding box regression processing layer in the deep neural network, to obtain the deviation of the candidate box corresponding to each anchor box relative to the each anchor box, the deviation being outputted from the bounding box regression processing layer.

In these alternative implementations, the executing body may obtain the probability and the deviation using the classification processing layer for classification and the bounding box regression processing layer for bounding box regression in the deep neural network. The classification processing layer and the bounding box regression processing layer may include a plurality of processing layers, and the plurality of processing layers included in the classification processing layer and the bounding box regression processing layer may include the same processing layer, i.e., a shared processing layer, e.g., a pooling layer. In addition, the classification processing layer and the bounding box regression processing layer may also include different processing layers. For example, each of the classification processing layer and the bounding box regression processing layer includes a fully connected layer respectively: a fully connected layer for classification and a fully connected layer for bounding box regression. The deep neural network here may be various networks capable of performing target classification and bounding box regression on an image, e.g., a convolutional neural network, a residual neural network, or a generative adversarial network.

In these implementations, the probability and the deviation may be efficiently and accurately generated using the deep neural network capable of performing classification and bounding box regression.

In some alternative implementations of the present embodiment, the to-be-processed image may be obtained by: acquiring a position of a bounding box of the to-be-tracked target in a previous video frame among adjacent video frames; generating a target bounding box at the position of the bounding box in a next video frame based on a target side length obtained by enlarging a side length of the bounding box; and generating the to-be-processed image based on a region where the target bounding box is located.

In these alternative implementations, the executing body may enlarge the side length of the bounding box in the next video frame (e.g., a 9th frame among an 8th frame and the 9th frame) among the two adjacent video frames at a detected position of the bounding box of the to-be-tracked target in the previous video frame, to obtain the target bounding box in the next video frame obtained from the enlarged bounding box. The executing body may directly use a region in the next video frame where the target bounding box is located as the to-be-processed image. In addition, the executing body may also use a scaled image obtained by scaling the region to a specified size as the to-be-processed image.

In practice, the bounding box in the previous video frame may be enlarged by a preset length value or by a preset multiple. For example, a side length obtained by doubling the side length of the bounding box may be used as the target side length.

The executing body may perform the above processing on each video frame except the first frame in a video, thereby generating each to-be-processed image, and then tracking the position of the to-be-tracked target in the each to-be-processed image.

In these implementations, a position range of the to-be-tracked target in the next frame can be accurately determined based on the previous frame, and the side length of the bounding box can be enlarged, thereby improving the recall rate of tracking.

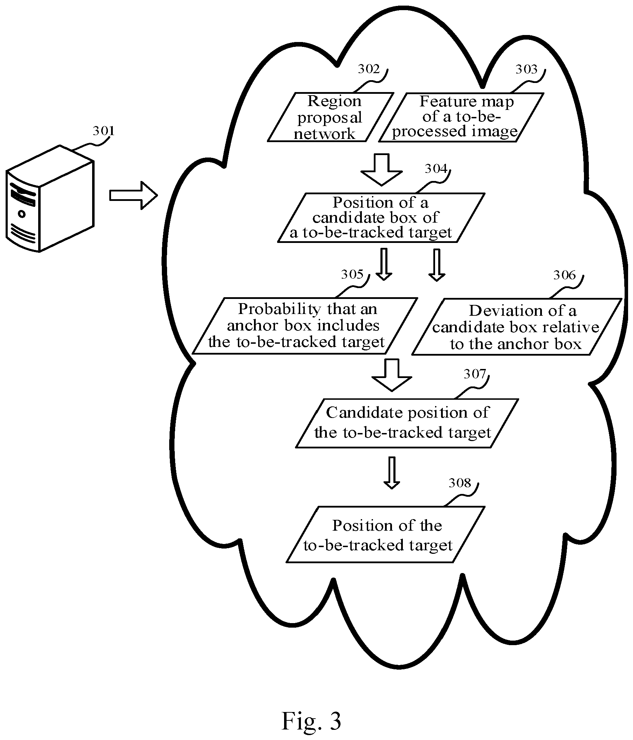

Further referring to Fig. 3, Fig. 3 is a schematic diagram of an application scenario of the method for tracking a target according to the present embodiment. In the application scenario of Fig. 3, an executing body 301 generates, based on a region proposal network 302 and a feature map 303 of a to-be-processed image, a position 304 of a candidate box where a to-be-tracked target, e.g., Mr. Zhang, is located in the to-be-processed image. The executing body 301 determines, for a pixel in the to-be-processed image, a probability 305 (e.g., 0.8) that each anchor box of at least one anchor box arranged for the pixel includes the to-be-tracked target, and determines a deviation 306 (e.g., a position offset amount (△ x, △y)) of a candidate box corresponding to each anchor box relative to the each anchor box. The executing body 301 determines, based on positions of at least two anchor boxes corresponding to at least two probabilities among the determined probabilities 305 and deviations 306 corresponding to the at least two anchor boxes respectively, candidate positions 307 of the to-be-tracked target corresponding to the at least two anchor boxes respectively. The executing body 301 can combine at least two candidate positions among the determined candidate positions to obtain a position 308 of the to-be-tracked target in the to-be-processed image.

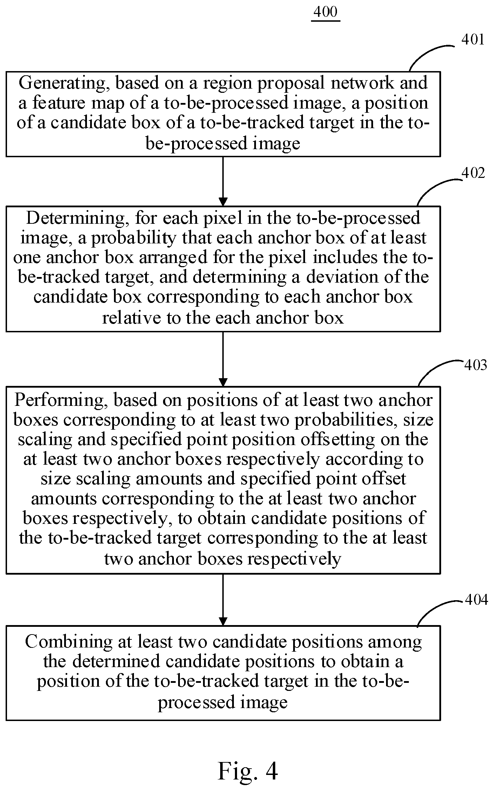

Further referring to Fig. 4, a process 400 of the method for tracking a target of an embodiment is shown. The process 400 includes the following steps.

Step 401: generating, based on a region proposal network and a feature map of a to-be-processed image, a position of a candidate box of a to-be-tracked target in the to-be-processed image.

In the present embodiment, an executing body (e.g., the server or the terminal device shown in Fig. 1) on which the method for tracking a target is performed may obtain the position of the candidate box of the to-be-tracked target in the to-be-processed image based on the region proposal network and the feature map of the to-be-processed image. The executing body may generate the position of the candidate box of the to-be-tracked target by various approaches based on the region proposal network and the feature map of the to-be-processed image.

Step 402: determining, for a pixel in the to-be-processed image, a probability that each anchor box of at least one anchor box arranged for the pixel includes the to-be-tracked target, and determining a deviation of the candidate box corresponding to each anchor box relative to the each anchor box.

In the present embodiment, the executing body may determine, for each pixel in the to-be-processed image, the probability that an anchor box of the at least one anchor box arranged for the pixel includes the to-be-tracked target. In addition, the executing body may further determine, for the pixel in the to-be-processed image, the deviation of the candidate box corresponding to each anchor box of the at least one anchor box arranged for the pixel relative to the each anchor box. The deviation here may include a position offset amount, e.g., a position offset amount of a specified point.

Step 403: performing, based on positions of at least two anchor boxes corresponding to at least two probabilities, size scaling and specified point position offsetting on the at least two anchor boxes respectively according to size scaling amounts and specified point offset amounts corresponding to the at least two anchor boxes respectively, to obtain candidate positions of the to-be-tracked target corresponding to the at least two anchor boxes respectively.

In the invention, the deviation includes a size scaling amount and a specified point position offset amount of an anchor box. The executing body performs position offsetting on the specified point of the anchor box, and performs size scaling on the anchor box, such that the results of position offsetting and size scaling of the anchor box are used as the candidate positions of the to-be-tracked target. The size scaling here may be size reduction or size enlargement, e.g., width and height may be scaled respectively. The specified point here may be any point specified in the anchor box, e.g., a center point or an upper left vertex. If a specified point other than the center point is used, the executing body needs to first perform position offsetting on the specified point, and then perform size scaling.

Step 404: combining at least two candidate positions among the determined candidate positions to obtain a position of the to-be-tracked target in the to-be-processed image.

In the present embodiment, the executing body acquires at least two candidate positions among the determined candidate positions, and combines the at least two candidate positions, i.e., using a set of all positions among the at least two candidate positions as the position of the to-be-tracked target in the to-be-processed image. Specifically, the executing body or other electronic devices may determine at least two candidate positions as per a preset rule (e.g., inputting into a preset model for determining the at least two candidate positions) or randomly from the determined candidate positions.

In the present embodiment, the candidate positions of the to-be-tracked target can be accurately determined by size scaling and position offsetting based on a position of an anchor box corresponding to each pixel.

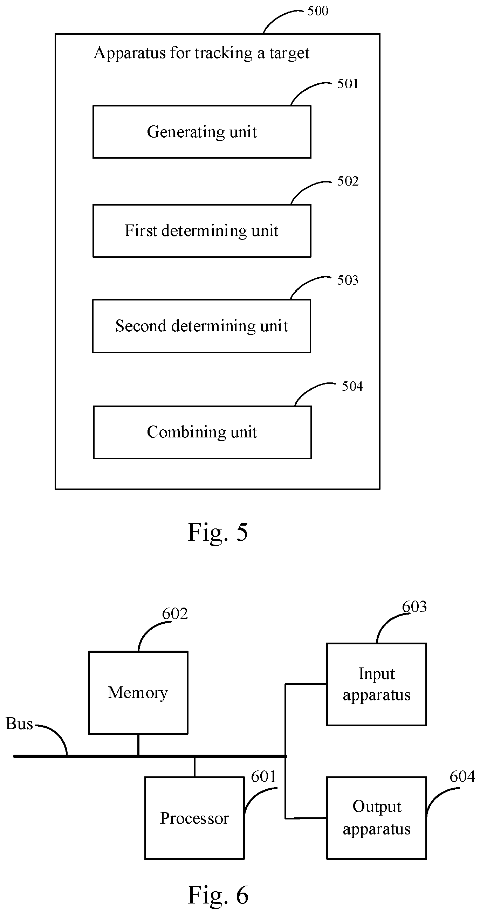

Further referring to Fig. 5, as an implementation of the method shown in the above figures, an embodiment of the present disclosure provides an apparatus for tracking a target. An embodiment of the apparatus corresponds to the embodiment of the method shown in Fig. 2. Besides the features disclosed below, an embodiment of the apparatus may further include features or effects identical to or corresponding to the embodiment of the method shown in Fig. 2. The apparatus may be specifically applied to various electronic devices.

As shown in Fig. 5, the apparatus 500 for tracking a target of the present embodiment includes: a generating unit 501, a first determining unit 502, a second determining unit 503, and a combining unit 504. The generating unit 501 is configured to generate, based on a region proposal network and a feature map of a to-be-processed image, a position of a candidate box of a to-be-tracked target in the to-be-processed image; the first determining unit 502 is configured to determine, for a pixel in the to-be-processed image, a probability that each anchor box of at least one anchor box arranged for the pixel includes the to-be-tracked target, and determine a deviation of the candidate box corresponding to each anchor box relative to the each anchor box; the second determining unit 503 is configured to determine, based on positions of at least two anchor boxes corresponding to at least two probabilities among the determined probabilities and deviations corresponding to the at least two anchor boxes respectively, candidate positions of the to-be-tracked target corresponding to the at least two anchor boxes respectively; and the combining unit 504 is configured to combine at least two candidate positions among the determined candidate positions to obtain a position of the to-be-tracked target in the to-be-processed image.

The related description of step 201, step 202, step 203, and step 204 in the corresponding embodiment of Fig. 2 may be referred to respectively for specific processing of the generating unit 501, the first determining unit 502, the second determining unit 503, and the combining unit 504 of the apparatus 500 for tracking a target and the technical effects thereof in the present embodiment. The description will not be repeated here.

In the invention, the deviation includes a size scaling amount and a specified point position offset amount; and the second determining unit is further configured to determine, based on the positions of the at least two anchor boxes corresponding to the at least two probabilities among the determined probabilities and the deviations corresponding to the at least two anchor boxes respectively, the candidate positions of the to-be-tracked target corresponding to the at least two anchor boxes respectively by: performing, based on the positions of the at least two anchor boxes corresponding to the at least two probabilities, size scaling and specified point position offsetting on the at least two anchor boxes respectively according to size scaling amounts and specified point offset amounts corresponding to the at least two anchor boxes respectively, to obtain the candidate positions of the to-be-tracked target corresponding to the at least two anchor boxes respectively.

In some alternative implementations of the present embodiment, the at least one candidate position is obtained by: voting for each of the determined candidate positions using a vote processing layer of a deep neural network, to generate a voting value of each of the determined candidate positions; and determining a candidate position with a voting value greater than a specified threshold as the at least one candidate position, where the larger the number of anchor boxes included in the at least two anchor boxes is, the larger the specified threshold is.

In these alternative implementations of the present embodiment, the at least two probabilities are obtained by: processing the determined probabilities using a preset window function, to obtain a processed probability of each of the determined probabilities; and selecting at least two processed probabilities from the processed probabilities in descending order, where probabilities corresponding to the selected at least two processed probabilities among the determined probabilities are the at least two probabilities.

In these alternative implementations of the present embodiment, the first determining unit is further configured to determine, for the pixel in the to-be-processed image, the probability that each anchor box of the at least one anchor box arranged for the pixel includes the to-be-tracked target, and determining the deviation of the candidate box corresponding to each anchor box relative to the anchor box by: inputting the generated position of the candidate box into a classification processing layer in a deep neural network, to obtain the probability that each anchor box of the at least one anchor box arranged for each pixel in the to-be-processed image includes the to-be-tracked target and that is outputted from the classification processing layer; and inputting the generated position of the candidate box into a bounding box regression processing layer in the deep neural network, to obtain the deviation of the candidate box corresponding to each anchor box relative to the each anchor box, the deviation being outputted from the bounding box regression processing layer.

In some alternative implementations of the present embodiment, the to-be-processed image is obtained by: acquiring a position of a bounding box of the to-be-tracked target in a previous video frame among adjacent video frames; generating a target bounding box at the position of the bounding box in a next video frame based on a target side length obtained by enlarging a side length of the bounding box; and generating the to-be-processed image based on a region where the target bounding box is located.

The generating unit is further configured to generate, based on the region proposal network and the feature map of the to-be-processed image, the position of the candidate box of the to-be-tracked target in the to-be-processed image by: inputting a feature map of a template image of the to-be-tracked target and the feature map of the to-be-processed image into the region proposal network, to obtain the position of the candidate box of the to-be-tracked target in the to-be-processed image outputted from the region proposal network, where the template image of the to-be-tracked target corresponds to a local region within a bounding box of the to-be-tracked target in an original image of the to-be-tracked target.

According to an embodiment of the present disclosure, the present disclosure further provides an electronic device and a readable storage medium.

As shown in Fig. 6, a block diagram of an electronic device configured to implement the method for tracking a target according to embodiments of the present disclosure is shown. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit embodiments of the present disclosure described and/or claimed herein.

As shown in Fig. 6, the electronic device includes: one or more processors 601, a memory 602, and interfaces for connecting various components, including a high-speed interface and a low-speed interface. The various components are interconnected using different buses, and may be mounted on a common motherboard or in other manners as required. The processor can process instructions for execution within the electronic device, including instructions stored in the memory or on the memory to display graphical information for a GUI on an external input/output apparatus (e.g., a display device coupled to an interface). In other embodiments, a plurality of processors and/or a plurality of buses may be used, as appropriate, along with a plurality of memories. Similarly, a plurality of electronic devices may be connected, with each device providing portions of necessary operations (e.g., as a server array, a group of blade servers, or a multi-processor system). In Fig. 6, a processor 601 is taken as an example.

The memory 602 is a non-transitory computer readable storage medium provided in embodiments of the present disclosure. The memory stores instructions executable by at least one processor, such that the at least one processor executes the method for tracking a target provided in embodiments of the present disclosure. The non-transitory computer readable storage medium of embodiments of the present disclosure stores computer instructions. The computer instructions are used for causing a computer to execute the method for tracking a target provided in embodiments of the present disclosure.

As a non-transitory computer readable storage medium, the memory 602 may be configured to store non-transitory software programs, non-transitory computer-executable programs, and modules, such as the program instructions/modules (e.g., the generating unit 501, the first determining unit 502, the second determining unit 503, and the combining unit 504 shown in Fig. 5) corresponding to the method for tracking a target in some embodiments of the present disclosure. The processor 601 runs non-transitory software programs, instructions, and modules stored in the memory 602, to execute various function applications and data processing of a server, i.e., implementing the method for tracking a target in the above embodiments of the method.

The memory 602 may include a program storage area and a data storage area, where the program storage area may store an operating system and an application program required by at least one function; and the data storage area may store, e.g., data created based on use of the electronic device for tracking a target. In addition, the memory 602 may include a high-speed random-access memory, and may further include a non-transitory memory, such as at least one magnetic disk storage component, a flash memory component, or other non-transitory solid state storage components. In some embodiments, the memory 602 alternatively includes memories disposed remotely relative to the processor 601, and these remote memories may be connected to the electronic device for tracking a target via a network. Examples of the above network include, but are not limited to, the Internet, an intranet, a local area network, a mobile communication network, and a combination thereof.

The electronic device of the method for tracking a target may further include: an input apparatus 603 and an output apparatus 604. The processor 601, the memory 602, the input apparatus 603, and the output apparatus 604 may be connected through a bus or in other manners. Bus connection is taken as an example in Fig. 6.

The input apparatus 603 may receive input digital or character information, and generate key signal inputs related to user settings and function control of the electronic device for tracking a target, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network) . Examples of the communication network include a local area network (LAN), a wide area network (WAN) and the Internet.

The computer system may include a client and a server. The client and the server are generally remote from each other and typically interact through the communication network. The relationship between the client and the server is generated through computer programs running on the respective computer and having a client-server relationship to each other.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logical functions. It should be further noted that, in some alternative implementations, the functions denoted by the blocks may also occur in a sequence different from the sequences shown in the figures. For example, any two blocks presented in succession may be executed substantially in parallel, or they may sometimes be executed in a reverse sequence, depending on the functions involved. It should be further noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in embodiments of the present disclosure may be implemented by software, or may be implemented by hardware. The described units may also be provided in a processor, for example, described as: a processor including a generating unit, a first determining unit, a second determining unit, and a combining unit. The names of the units do not constitute a limitation to such units themselves in some cases. For example, the combining unit may be further described as "a unit configured to combine at least one candidate position among determined candidate positions to obtain a position of a to-be-tracked target in a to-be-processed image."

In another aspect, an embodiment of the present disclosure further provides a computer readable medium. The computer readable medium may be included in the apparatus described in the above embodiments, or a stand-alone computer readable medium without being assembled into the apparatus. The computer readable medium carries one or more programs. The one or more programs, when executed by the apparatus, cause the apparatus to: generate, based on a region proposal network and a feature map of a to-be-processed image, a position of a candidate box of a to-be-tracked target in the to-be-processed image; determine, for a pixel in the to-be-processed image, a probability that each anchor box of at least one anchor box arranged for the pixel includes the to-be-tracked target, and determine a deviation of the candidate box corresponding to each anchor box relative to the anchor box; determine, based on positions of at least two anchor boxes corresponding to at least two probabilities among the determined probabilities and deviations corresponding to the at least two anchor boxes respectively, candidate positions of the to-be-tracked target corresponding to the at least two anchor boxes respectively; and combine at least two candidate positions among the determined candidate positions to obtain a position of the to-be-tracked target in the to-be-processed image.

According to an embodiment of the present disclosure, the present disclosure further provides a computer program product including a computer program, where the computer program, when executed by a processor, implements the method for tracking a target.

The above description only provides an explanation of embodiments of the present disclosure and the technical principles used. It should be appreciated by those skilled in the art that the inventive scope of embodiments of the present disclosure is not limited to the technical solutions formed by the particular combinations of the above-described technical features. . Technical schemes formed by the above-described features being interchanged with, but not limited to, technical features with similar functions disclosed in embodiments of the present disclosure are examples.

## Claims

1. A method for tracking a target, comprising:
generating (201, 401), based on a region proposal network and a feature map of a to-be-processed image, a position of a candidate box of a to-be-tracked target in the to-be-processed image, wherein the generating (201, 401) comprises:
inputting a feature map of a template image of the to-be-tracked target and the feature map of the to-be-processed image into the region proposal network, to obtain the position of the candidate box of the to-be-tracked target in the to-be-processed image outputted from the region proposal network, wherein the template image of the to-be-tracked target corresponds to a local region within a bounding box of the to-be-tracked target in an original image of the to-be-tracked target, wherein the position of the candidate box of the to-be-tracked target is the position of the candidate box where the to-be-tracked target is located in the to-be-processed image;
determining (202, 402), for a pixel in the to-be-processed image, a probability that each anchor box of at least one anchor box arranged for the pixel includes the to-be-tracked target, and determining a deviation of the candidate box corresponding to the each anchor box relative to the each anchor box;
determining (203), based on positions of at least two anchor boxes corresponding to at least two probabilities among the determined probabilities and deviations corresponding to the at least two anchor boxes respectively, candidate positions of the to-be-tracked target corresponding to the at least two anchor boxes respectively; and
combining (204, 404) at least two candidate positions among the determined candidate positions to obtain a position of the to-be-tracked target in the to-be-processed image,
**characterized in that**
the deviation comprises a size scaling amount and a specified point position offset amount; and the determining (203), based on the positions of the at least two anchor boxes corresponding to the at least two probabilities among the determined probabilities and the deviations corresponding to the at least two anchor boxes respectively, the candidate positions of the to-be-tracked target corresponding to the at least two anchor boxes respectively comprises:
performing (403), based on the positions of the at least two anchor boxes corresponding to the at least two probabilities, size scaling and specified point position offsetting on the at least two anchor boxes respectively according to size scaling amounts and specified point offset amounts corresponding to the at least two anchor boxes respectively, to obtain the candidate positions of the to-be-tracked target corresponding to the at least two anchor boxes respectively.

2. The method according to claim 1, wherein at least one candidate position is obtained by:
voting for each of the determined candidate positions using a vote processing layer of a deep neural network, to generate a voting value of the each of the determined candidate positions; and
determining a candidate position with a voting value greater than a specified threshold as the at least one candidate position, wherein the larger the number of anchor boxes included in the at least two anchor boxes is, the larger the specified threshold is.

3. The method according to claim 1 or 2, wherein the at least two probabilities are obtained by:
processing the determined probabilities using a preset window function, to obtain a processed probability of each of the determined probabilities; and
selecting at least two processed probabilities from the processed probabilities in descending order, wherein probabilities corresponding to the selected at least two processed probabilities among the determined probabilities are the at least two probabilities.

4. The method according to any one of claims 1-3, wherein the determining (202, 402), for the pixel in the to-be-processed image, the probability that the each anchor box of the at least one anchor box arranged for the pixel includes the to-be-tracked target, and determining the deviation of the candidate box corresponding to the each anchor box relative to the each anchor box comprises:
inputting the generated position of the candidate box into a classification processing layer in a deep neural network, to obtain the probability that the each anchor box of the at least one anchor box arranged for each pixel in the to-be-processed image includes the to-be-tracked target and that is outputted from the classification processing layer; and
inputting the generated position of the candidate box into a bounding box regression processing layer in the deep neural network, to obtain the deviation of the candidate box corresponding to the each anchor box relative to the each anchor box, the deviation being outputted from the bounding box regression processing layer.

5. The method according to any one of claims 1-4, wherein the to-be-processed image is obtained by:
acquiring a position of a bounding box of the to-be-tracked target in a previous video frame among adjacent video frames;
generating a target bounding box at the position of the bounding box in a next video frame based on a target side length obtained by enlarging a side length of the bounding box; and
generating the to-be-processed image based on a region where the target bounding box is located.

6. An apparatus (500) for tracking a target, comprising a plurality of modules (501, 502, 503, 504) configured to implement the method according to any one of claims 1-5.

7. An electronic device, comprising:
one or more processors (601); and
a storage apparatus (602) for storing one or more programs,
the one or more programs, when executed by the one or more processors (601), causing the one or more processors (601) to implement the method according to any one of claims 1-5.

8. A computer readable storage medium, storing a computer program thereon, wherein the program, when executed by a processor (601), implements the method according to any one of claims 1-5.

9. A computer program product comprising a computer program, the computer program, when executed by a processor (601), implementing the method according to any one of claims 1-5.

## Patentansprüche

1. Verfahren zum Verfolgen eines Ziels, umfassend:
Erzeugen (201, 401), basierend auf einem Regionsvorschlagsnetzwerk und einer Merkmalskarte eines zu verarbeitenden Bildes, einer Position einer Kandidatenbox eines zu verfolgenden Ziels in dem zu verarbeitenden Bild, wobei das Erzeugen (201, 401) umfasst:
Eingeben einer Merkmalskarte eines Schablonenbildes des zu verfolgenden Ziels und der Merkmalskarte des zu verarbeitenden Bildes in das Regionsvorschlagsnetzwerk, um die Position der Kandidatenbox des zu verfolgenden Ziels in dem zu verarbeitenden Bild zu erhalten, das von dem Regionsvorschlagsnetzwerk ausgegeben wird, wobei das Schablonenbild des zu verfolgenden Ziels einer lokalen Region innerhalb einer Begrenzungsbox des zu verfolgenden Ziels in einem ursprünglichen Bild des zu verfolgenden Ziels entspricht, wobei die Position der Kandidatenbox des zu verfolgenden Ziels die Position der Kandidatenbox ist, wo sich das zu verfolgende Ziel in dem zu verarbeitenden Bild befindet;
Bestimmen (202, 402), für ein Pixel in dem zu verarbeitenden Bild, einer Wahrscheinlichkeit, dass jede Ankerbox von wenigstens einer für das Pixel angeordneten Ankerbox das zu verfolgende Ziel einschließt, und Bestimmen einer Abweichung der Kandidatenbox, die jeder Ankerbox entspricht, relativ zu jeder Ankerbox;
Bestimmen (203) von Kandidatenpositionen des zu verfolgenden Ziels, die jeweils den wenigstens zwei Ankerboxen entsprechen, basierend auf Positionen von wenigstens zwei Ankerboxen, die wenigstens zwei Wahrscheinlichkeiten unter den bestimmten Wahrscheinlichkeiten und Abweichungen entsprechen, die jeweils den wenigstens zwei Ankerboxen entsprechen; und
Kombinieren (204, 404) von wenigstens zwei Kandidatenpositionen unter den bestimmten Kandidatenpositionen, um eine Position des zu verfolgenden Ziels in dem zu verarbeitenden Bild zu erhalten,
**dadurch gekennzeichnet, dass** die Abweichung einen Größenskalierungsbetrag und einen spezifizierten Punktpositionsversatzbetrag umfasst; und das Bestimmen (203), basierend auf den Positionen der wenigstens zwei Ankerboxen, die den wenigstens zwei Wahrscheinlichkeiten unter den bestimmten Wahrscheinlichkeiten und den Abweichungen entsprechen, die jeweils den wenigstens zwei Ankerboxen entsprechen, die Kandidatenpositionen des zu verfolgenden Ziels, die jeweils den wenigstens zwei Ankerboxen entsprechen, umfasst:
Durchführen (403), basierend auf den Positionen der wenigstens zwei Ankerboxen, die den wenigstens zwei Wahrscheinlichkeiten entsprechen, einer Größenskalierung und eines spezifizierten Punktpositionsversatzes an den wenigstens zwei Ankerboxen jeweils gemäß Größenskalierungsbeträgen und spezifizierten Punktversatzbeträgen, die jeweils den wenigstens zwei Ankerboxen entsprechen, um die Kandidatenpositionen des zu verfolgenden Ziels zu erhalten, die jeweils den wenigstens zwei Ankerboxen entsprechen.

2. Verfahren nach Anspruch 1, wobei wenigstens eine Kandidatenposition erhalten wird durch:
Abstimmen für jede der bestimmten Kandidatenpositionen unter Verwendung einer Stimmverarbeitungsschicht eines tiefen neuronalen Netzes, um einen Abstimmungswert für jede der bestimmten Kandidatenpositionen zu erzeugen; und
Bestimmen einer Kandidatenposition mit einem Abstimmungswert, der größer als ein spezifizierter Schwellenwert ist, als die wenigstens eine Kandidatenposition, wobei der spezifizierte Schwellenwert umso größer ist, je größer die Anzahl der in den wenigstens zwei Ankerboxen enthaltenen Ankerboxen ist.

3. Verfahren nach Anspruch 1 oder 2, wobei die wenigstens zwei Wahrscheinlichkeiten erhalten werden durch:
Verarbeiten der bestimmten Wahrscheinlichkeiten unter Verwendung einer voreingestellten Fensterfunktion, um eine verarbeitete Wahrscheinlichkeit für jede der bestimmten Wahrscheinlichkeiten zu erhalten; und
Auswählen von wenigstens zwei verarbeiteten Wahrscheinlichkeiten aus den verarbeiteten Wahrscheinlichkeiten in absteigender Reihenfolge, wobei die Wahrscheinlichkeiten, die den ausgewählten wenigstens zwei verarbeiteten Wahrscheinlichkeiten unter den bestimmten Wahrscheinlichkeiten entsprechen, die wenigstens zwei Wahrscheinlichkeiten sind.

4. Verfahren nach einem der Ansprüche 1 bis 3, wobei das Bestimmen (202, 402) der Wahrscheinlichkeit für das Pixel in dem zu verarbeitenden Bild, dass jede Ankerbox der wenigstens einen Ankerbox, die für das Pixel angeordnet ist, das zu verfolgende Ziel einschließt, und das Bestimmen der Abweichung der jeder Ankerbox entsprechenden Kandidatenbox relativ zu jeder Ankerbox umfasst:
Eingeben der erzeugten Position der Kandidatenbox in eine Klassifizierungsverarbeitungsschicht in einem tiefen neuronalen Netz, um die Wahrscheinlichkeit zu erhalten, dass jede Ankerbox der wenigstens einen Ankerbox, die für jedes Pixel in dem zu verarbeitenden Bild angeordnet ist, das zu verfolgende Ziel einschließt, und das von der Klassifizierungsverarbeitungsschicht ausgegeben wird; und
Eingeben der erzeugten Position der Kandidatenbox in eine Begrenzungsbox-Regressionsverarbeitungsschicht in dem tiefen neuronalen Netz, um die Abweichung der Kandidatenbox, die der jeweiligen Ankerbox entspricht, relativ zu jeder Ankerbox zu erhalten, wobei die Abweichung von der Begrenzungsbox-Regressionsverarbeitungsschicht ausgegeben wird.

5. Verfahren nach einem der Ansprüche 1 bis 4, wobei das zu verarbeitende Bild erhalten wird durch:
Erfassen einer Position einer Begrenzungsbox des zu verfolgenden Ziels in einem vorhergehenden Videoframe unter benachbarten Videoframes;
Erzeugen einer Begrenzungsbox an der Position der Begrenzungsbox in einem nächsten Videoframe basierend auf einer Zielseitenlänge, die durch Vergrößern einer Seitenlänge der Begrenzungsbox erhalten wird; und
Erzeugen des zu verarbeitenden Bildes basierend auf einer Region, in der sich die Begrenzungsbox befindet.

6. Vorrichtung (500) zum Verfolgen eines Ziels, die eine Vielzahl von Modulen (501, 502, 503, 504) umfasst, die so ausgelegt sind, dass sie das Verfahren nach einem der Ansprüche 1 bis 5 ausführen.

7. Elektronische Vorrichtung, die umfasst:
einen oder mehrere Prozessoren (601); und
eine Speichervorrichtung (602) zum Speichern eines oder mehrerer Programme,
wobei das eine oder die mehreren Programme, wenn sie von dem einen oder den mehreren Prozessoren (601) ausgeführt werden, bewirken, dass der eine oder die mehreren Prozessoren (601) das Verfahren nach einem der Ansprüche 1 bis 5 ausführen.

8. Computerlesbares Speichermedium, auf dem ein Computerprogramm gespeichert ist, wobei das Programm, wenn es von einem Prozessor (601) ausgeführt wird, das Verfahren nach einem der Ansprüche 1 bis 5 ausführt.

9. Computerprogrammprodukt, das ein Computerprogramm umfasst, wobei das Computerprogramm, wenn es von einem Prozessor (601) ausgeführt wird, das Verfahren nach einem der Ansprüche 1 bis 5 ausführt.

## Revendications

1. Procédé de poursuite d'une cible, comprenant les étapes consistant à :
générer (201, 401), sur la base d'un réseau de proposition de région et d'une carte de caractéristiques d'une image à traiter, une position d'une boîte candidate d'une cible à poursuivre dans l'image à traiter, dans lequel la génération (201, 401) comprend les étapes consistant à :
entrer une carte de caractéristiques d'une image modèle de la cible à poursuivre et la carte de caractéristiques de l'image à traiter dans le réseau de proposition de région, pour obtenir la position de la boîte candidate de la cible à poursuivre dans l'image à traiter émise par le réseau de proposition de région, dans lequel l'image modèle de la cible à poursuivre correspond à une région locale à l'intérieur d'une boîte englobante de la cible à poursuivre dans une image originale du cible à poursuivre, dans lequel la position de la boîte candidate de la cible à poursuivre est la position de la boîte candidate où la cible à poursuivre est située dans l'image à traiter ;
déterminer (202, 402), pour un pixel dans l'image à traiter, une probabilité que chaque boîte d'ancrage d'au moins une boîte d'ancrage disposée pour le pixel comprenne la cible à poursuivre, et déterminer un écart de la boîte candidate correspondant à chaque boîte d'ancrage par rapport à chaque boîte d'ancrage ;
déterminer (203), sur la base des positions d'au moins deux boîtes d'ancrage correspondant à au moins deux probabilités parmi les probabilités déterminées et des écarts correspondant respectivement aux au moins deux boîtes d'ancrage, des positions candidates de la cible à poursuivre correspondant à l'au moins au moins deux boîtes d'ancrage respectivement ; et
combiner (204, 404) au moins deux positions candidates parmi les positions candidates déterminées pour obtenir une position de la cible à poursuivre dans l'image à traiter, **caractérisé en ce que**
l'écart comprend une quantité de mise à l'échelle de taille et une quantité de décalage de position de point spécifiée ; et la détermination (203), sur la base des positions des au moins deux boîtes d'ancrage correspondant aux au moins deux probabilités parmi les probabilités déterminées et les écarts correspondant aux au moins deux boîtes d'ancrage respectivement, les positions candidates du cible à poursuivre correspondant aux au moins deux boîtes d'ancrage comprend respectivement les étapes consistant à :
effectuer (403), sur la base des positions des au moins deux boîtes d'ancrage correspondant aux au moins deux probabilités, une mise à l'échelle de taille et un décalage de position de point spécifié sur les au moins deux boîtes d'ancrage respectivement selon des quantités de mise à l'échelle de taille et des quantités de décalage de point spécifiées correspondant aux au moins deux boîtes d'ancrage respectivement, pour obtenir les positions candidates de la cible à poursuivre correspondant respectivement aux au moins deux boîtes d'ancrage.

2. Procédé selon la revendication 1, dans lequel au moins un position candidate est obtenu par les étapes consistant à :
voter pour chacune des positions candidates déterminées à l'aide d'une couche de traitement de vote d'un réseau neuronal profond, pour générer une valeur de vote de chacune des positions candidates déterminées ; et
déterminer une position candidate avec une valeur de vote supérieure à un seuil spécifié en tant qu'au moins une position candidate, dans lequel plus le nombre de boîtes d'ancrage incluses dans les au moins deux boîtes d'ancrage est grand, plus le seuil spécifié est grand.

3. Procédé selon la revendication 1 ou 2, dans lequel les au moins deux probabilités sont obtenues par les étapes consistant à :
traiter les probabilités déterminées à l'aide d'une fonction de fenêtre prédéfinie, pour obtenir une probabilité traitée de chacune des probabilités déterminées ; et
sélectionner au moins deux probabilités traitées parmi les probabilités traitées dans l'ordre décroissant, dans lequel les probabilités correspondant aux au moins deux probabilités traitées sélectionnées parmi les probabilités déterminées sont les au moins deux probabilités.

4. Procédé selon l'une quelconque des revendications 1 à 3, dans lequel la détermination (202, 402), pour le pixel dans l'image à traiter, de la probabilité que chaque boîte d'ancrage de la au moins une boîte d'ancrage disposée pour le pixel comprenne la cible à poursuivre, et la détermination de l'écart de la boîte candidate correspondant à chaque boîte d'ancrage par rapport à chaque boîte d'ancrage comprend les étapes consistant à :
entrer la position générée de la boîte candidate dans une couche de traitement de classification dans un réseau neuronal profond, pour obtenir la probabilité que ladite chaque boîte d'ancrage de la au moins une boîte d'ancrage agencée pour chaque pixel dans l'image à traiter inclut la cible à poursuivre et qui est fournie en sortie par la couche de traitement de classification ; et
entrer la position générée de la boîte candidate dans une couche de traitement de régression de boîte englobante dans le réseau neuronal profond, pour obtenir l'écart de la boîte candidate correspondant à ladite chaque boîte d'ancrage par rapport à ladite chaque boîte d'ancrage, l'écart étant fourni en sortie à partir de la couche de traitement de régression de la boîte englobante.

5. Procédé selon l'une quelconque des revendications 1 à 4, dans lequel l'image à traiter est obtenue par les étapes consistant à
acquérir une position d'une boîte englobante de la cible à poursuivre dans une image vidéo précédente parmi des images vidéo adjacentes ;
générer une boîte englobante cible à la position de la boîte englobante dans une image vidéo suivante sur la base d'une longueur de côté cible obtenue en agrandissant une longueur de côté de la boîte englobante ; et
générer l'image à traiter sur la base d'une région où se trouve la boîte englobante cible.

6. Appareil (500) de poursuite d'une cible, comprenant une pluralité de modules (501, 502, 503, 504) configurés pour mettre en oeuvre le procédé selon l'une quelconque des revendications 1-5.

7. Un appareil électronique, comprenant :
un ou plusieurs processeurs (601) et un appareil de stockage (602) pour stocker un ou plusieurs programmes, le ou les programmes, lorsqu'ils sont exécutés par le ou les processeurs (601), amenant le ou les processeurs (601) à mettre en oeuvre le procédé selon l'une quelconque des revendications 1 à 5.

8. Support de stockage lisible par ordinateur, stockant un programme informatique sur celui-ci, dans lequel le programme, lorsqu'il est exécuté par un processeur (601), met en oeuvre le procédé selon l'une quelconque des revendications 1 à 5.

9. Produit formant programme d'ordinateur comprenant un programme d'ordinateur, le programme d'ordinateur, lorsqu'il est exécuté par un processeur (601), mettant en oeuvre le procédé selon l'une quelconque des revendications 1 à 5.
